# EUROPEAN PATENT APPLICATION

(11) **EP 1 130 931 A1**
(43) Date of publication of application: **05.09.2001**
(21) Application number: 00301782.9
(22) Date of filing: 03.03.2000
(51) Int. Cl.: H04Q 7/22

(54) **Resource reservation in mobile packet data telecommunications network**

(71) Applicant: LUCENT TECHNOLOGIES INC., Murray Hill, New Jersey 07974-0636 (US)
(72) Inventor: Xiaobao X Chen, Swindon, Wiltshire SN4 4DQ (GB)
(74) Representative: Williams, David John

(57) **Abstract**

In the UMTS resource reservation is provided by sending either the data object contents or the entire contents of a QoS request in RSVP messages. The QoS request is piggybacked in PDP Context messages, and is passed transparently between MT 30 and GGSN 24.

## Description

This invention relates to telecommunication networks operating Internet Protocol (IP), and relates especially to a method of reserving resources.

In third generation (3G) telecommunications networks, such as Universal Mobile Telecommunication Systems (UMTS), broad bandwidth is provided for services such as data and multimedia in addition to voice. An obvious need is that required Quality of Service (QoS) should be provided to users but in IP networks if contention for resources is not resolved then QoS can not be guaranteed.

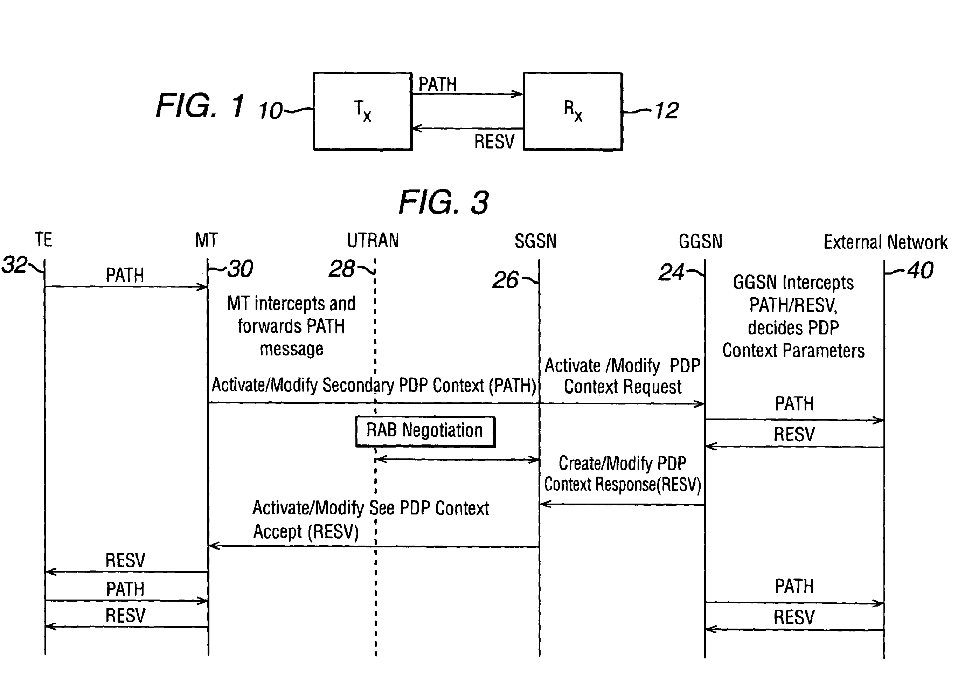

In IP networks or, in general, Internet, Resource Reservation Protocol (RSVP) is used to allow the network to reserve the resources so as to provide QoS. RSVP is an end-to-end protocol and is illustrated in Figure 1.

A transmitting user 10 sends to a receiving user 12 a message PATH. The PATH message carries the traffic characteristics information such as TSpecs to indicate the traffic behavior that is to be sent from the user 10.

When the receiving user 12 receives the PATH message, it sends a RESV message that contains QoS request such as FlowSpecs.

In practice, the transmitting and receiving users 10 and 12 can be located remotely so that PATH and RESV messages pass through several nodes. As each node receives both messages, it makes the decision as to whether adequate resources in that node can be reserved. If this is possible, then the messages are relayed to the next hop for the PATH message and the previous hop for the RESV message. When the RESV message reaches the transmitting user 10, it begins to transmit data.

Periodic refresh messages are sent subsequently to maintain the QoS status at each node that has been set up.

In UMTS, RSVP may be used to support those applications that use RSVP to activate the QoS control. It is proposed in TSG2#10 S2-0000131, "Processing RSVP Signalling in MT" that RSVP is supported in MT for activating QoS control in UMTS. But the major drawbacks that have been envisaged are that the RSVP messages are transmitted separately across the UMTS networks and thus consume extra UMTS network resources, in particular, the radio resources. In addition, it increases traffic load to the UMTS network.

It is an object of the invention to provide a method of reserving resources in third or future generations of wireless mobile networks such as UMTS networks that has no or minimal impact on existing architecture or QoS procedures, and minimizes any extra signalling traffic associated with supporting the method.

According to the invention, in a third or future generation telecommunication network, a method of allocating resources for user traffic passing between a mobile terminal and a remote user characterized by sending at least a data object content of a quality of service request transparently between a support node associated with said remote user and said mobile terminal.

In the accompanying drawings, Figure 1 illustrates the operation of RSVP. The invention will be described by way of example only with reference to Figure s2 and 3 in which:-
Figure 2 illustrates the schematically the UMST; and
Figure 3 illustrates the interchange of messages according to the invention.

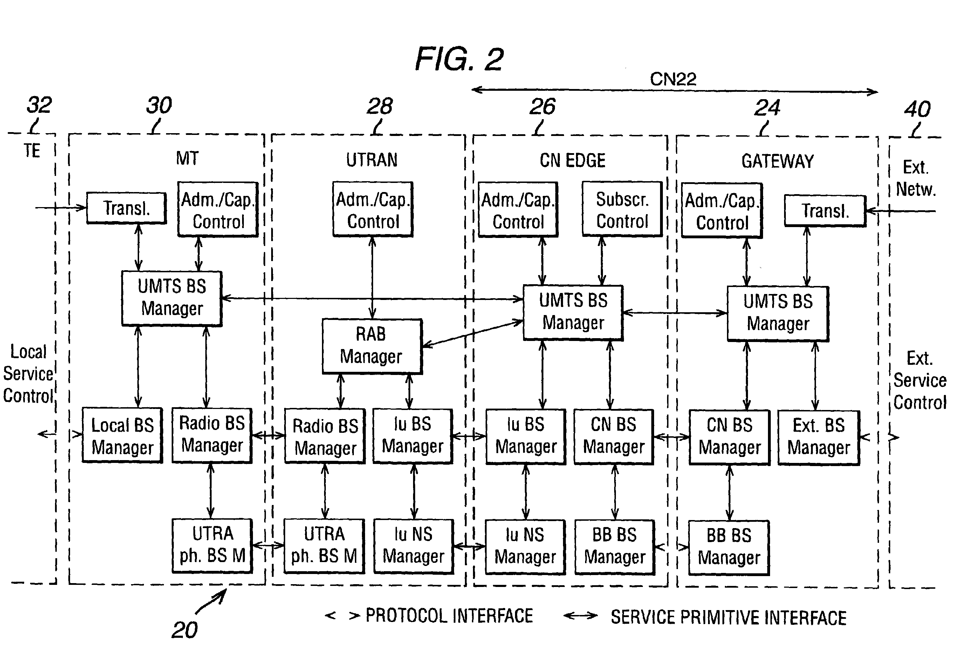

In Figure 2 the UMTS 20 comprises a Core Network (CN) 22 formed by Gateway 24 and a CN Edge 26 and a UMTS Terrestrial Radio Access Network (UTRAN) 28. A Mobile Terminal (MT) 30 communicates with the UTRAN 28 across the radio interface. The MT 30 is UMTS specific and is connected to the Terminal Equipment (TE) 32 that may run non-UMTS specific applications.

The Gateway 24 can communicate with External Network 40.

Each illustrated component has sub-components which are not further described.

The UMTS 20 operates the Application-specific Packet Data Protocol (PDP) Context as usual to negotiate the QoS and activate the QoS control between the MT 30 and UMTS network 20.

In Figure 3, the CN Edge is now termed Serving GPRS Support Node (SGSN) 26 and the Gateway is now termed Gateway GPRS Support Node (GGSN) 24.

In the inventive method, the RSVP messages are "piggybacked" to the PDP Context messages. Figure 3 illustrates RSVP activated QoS control in the uplink direction.

The RSVP session is used end-to-end and terminated at the MT 30 and the GGSN 24. The assumption is that the TE 32 intends to set up RSVP session with its remote peer (not shown) that also uses RSVP signaling in the external network.

When the MT 30 receives the PATH message from TE 32, MT 30 checks to see if a PDP context exists for this RSVP session. If it does, the MT triggers the Modify/Create SecondaryPDP context message if there is a change in QoS parameters or if a secondary PDP context needs to be created. The PATH message is piggybacked on the Activate/Modify PDP context Request messages using the PDP config. option. Note that the MT is expected to populate the Requested QoS IE based on the PATH information. SGSN 26 can use the information within the Requested QoS IE (Information Element) to do RAB negotiation with UTRAN 28. The PATH message will be relayed to GGSN 24. The GGSN extracts the PATH message and then relays it to the external network.

The GGSN can generate the PDP context response without waiting for the RESV message. However, with that approach, GGSN may not be able to populate the Negotiated QoS IE with values that matches RESV QoS requirements. Figure 3 shows that the GGSN waits for RESV before generating the PDP context response message.

When the RESV response from the remote peer is received at the GGSN 24, it uses this information, along with relevant local configuration, to see if QoS Negotiated is the same as QoS Requested. Then it piggybacks the RESV message on the Activate/Modify PDP Context response message using the PDP config. option. RAB re-negotiation can take place between SGSN and UTRAN if QoS Negotiated is different from QoS Requested. Finally the RESV message possibly adapted at the GGSN is sent on to the TE 32 by piggybacking on the Activate /Modify -PDP Context Confirmation message(s).

It is an advantage of this arrangement that RSVP refresh messages are not required, becauses a PDP operates a specific release process.

This proposed piggybacking of RSVP messages/Traffic &QoS Data Objects on PDP Context control messages aims to speed up the end-to-end QoS negotiation process and minimizes the extra traffic load on the network, in particular, over the air interface.

An alternative solution is to extract the Traffic and QoS Data Objects such as the Tspec, ADSpec from the PATH message and the FlowSpecs from the RESV message and piggyback them using the PDP config. option to the Activate/Modify PDP Context Request/Response messages.

In these circumstances the GGSN can determine if it is a PATH message or a RESV messages or other RSVP messages carried by secondary PDP context by looking for the header information. A special flag is provided on QoS data objects. There are at most twelve such objects, so a flag occupies at most half a byte; a single byte can accommodate all the diffeent types of RSVP messages including the PATH and RESV messages.

## Claims

1. In a third or future generation telecommunication network, a method of allocating resources for user traffic passing between a mobile terminal and a remote user characterized by sending at least a data object content of a quality of service request transparently between a support node associated with said remote user and said mobile terminal.

2. A method according to claim 1 in which the telecommunication network operates a packet data protocol context and the data object content is included in a packet data protocol context message.

3. A method according to claim 1 or 2 in which the quality of service request is carried in the resource reservation protocol.

4. A method according to any preceding claim in which the data objects are each identified by a header information.

5. A method according to any preceding claim comprising sending an entire quality of service request.
